# EUROPEAN PATENT APPLICATION

(11) **EP 4 765 654 A1**
(43) Date of publication of application: **24.06.2026**
(21) Application number: 24874977.2
(22) Date of filing: 04.10.2024
(51) Int. Cl.: H04B 1/50, H04B 1/00, H04B 1/04, H04B 1/10, H04B 1/401, H04W 84/06, H04W 88/06, H01Q 1/52

(54) **ELECTRONIC DEVICE COMPRISING ANTENNA AND CONTROL METHOD THEREFOR**

(30) Priority: 05.10.2023 KR 20230132878; 06.11.2023 KR 20230151642
(71) Applicant: Samsung Electronics Co., Ltd., Suwon-si, Gyeonggi-do 16677 (KR)
(72) Inventor: NAM, In, Suwon-si Gyeonggi-do 16677 (KR); AHN, Seungok, Suwon-si Gyeonggi-do 16677 (KR); LEE, Hanyeop, Suwon-si Gyeonggi-do 16677 (KR); LIM, Gun, Suwon-si Gyeonggi-do 16677 (KR)
(74) Representative: Gulde & Partner
(86) International application number: PCT/KR2024/015073
(87) International publication number: WO 2025/075421

(57) **Abstract**

An electronic device according to an embodiment of the disclosure may comprise: a first wireless communication circuit configured to transmit and receive a signal associated with cellular communication; a second wireless communication circuit configured to transmit and receive a satellite signal; and at least one processor, wherein the at least one processor may be configured to: receive wireless resource information of uplink allocated to the electronic device by using the first wireless communication circuit; receive a second signal by using the second wireless communication circuit; identify control information configured on the basis of a second harmonic component of the first signal indicated in the wireless resource information; and attenuate at least a part of the second signal by using the control information.

## Description

### TECHNICAL FIELD

The disclosure relates to an electronic device including an antenna and a method for controlling the same.

### BACKGROUND

An electronic device such as a smartphone or a tablet personal computer may transmit and receive data to and from an external device through wireless communication using an antenna. The electronic device may perform various functions such as a voice call, a video call, message transmission, or Internet search using the wireless communication data. Communication performance of the antenna mounted on the electronic device may vary depending on various factors. For example, when an element made of a metal component or another antenna is disposed in the vicinity of the antenna, communication performance of an existing antenna may be affected by the element or the another antenna.

The foregoing information may be provided as related art for the purpose of assisting in understanding the disclosure. No assertion or determination is made as to whether any of the foregoing may be applied as prior art with respect to the disclosure.

### DISCLOSURE

### TECHNICAL SOLUTION

An electronic device according to an embodiment may include a first antenna, a second antenna, first wireless communication circuitry electrically connected to the first antenna and configured to transmit and receive a signal associated with cellular communication, second wireless communication circuitry electrically connected to the second antenna and configured to transmit and receive a satellite signal, and at least one processor electrically connected to the first wireless communication circuitry and the second wireless communication circuitry, wherein the at least one processor is configured to receive radio resource information of an uplink allocated to the electronic device using the first wireless communication circuitry, receive a second signal using the second wireless communication circuitry, identify control information set based on a second harmonic component of a first signal indicated by the radio resource information, and attenuate at least a portion of the second signal using the control information.

A method for controlling an electronic device according to an embodiment may include receiving, by using first wireless communication circuitry, radio resource information of an uplink, receiving, by using second wireless communication circuitry, a second signal, identifying control information set based on a second harmonic component of the first signal indicated by the radio resource information, and attenuating at least a portion of the second signal by using the control information.

A non-transitory computer-readable storage medium storing ,instructions according to an embodiment, wherein the instructions, when executed by at least one processor, cause the at least one processor to receive radio resource information of an uplink using first wireless communication circuitry, receive a second signal using second wireless communication circuitry, identify control information set based on a second harmonic component of the first signal indicated by the radio resource information, and attenuate at least a portion of the second signal using the control information.

### BRIEF DESCRIPTION OF THE DRAWINGS

FIG. 1A illustrates a system including an electronic device, a base station, and a satellite, according to an embodiment.
FIG. 1B illustrates a block diagram indicating a configuration of an electronic device according to an embodiment.
FIG. 2 illustrates a frequency band of signals transmitted and received by an electronic device according to an embodiment.
FIG. 3A is a flowchart illustrating operations of an electronic device according to an embodiment.
FIG. 3B is a flowchart illustrating operations of an electronic device according to an embodiment, the operations further including determining a frequency band of a first signal.
FIG. 3C is a flowchart illustrating operations of an electronic device according to another embodiment.
FIG. 4A illustrates the signal strength according to the frequency of a signal received by the electronic device according to an embodiment, when the operation 301 of FIG. 3A is performed.
FIG. 4B illustrates the signal strength according to the frequency of a signal received by the electronic device according to an embodiment, when the operation 301 and the operation 303 of FIG. 3A are simultaneously performed.
FIG. 4C illustrates the signal strength according to the frequency of a signal received by the electronic device according to an embodiment, when the operation 311 of FIG. 3A is performed.
FIG. 4D illustrates divided frequency intervals referred by the control frequency signals when the electronic device attenuates the second signal according to an embodiment.
FIG. 5 shows a reference table referenced to an operation 304 of FIG. 3A.
FIG. 6 is a block diagram illustrating an electronic device in a network environment according to various embodiments.

With regard to the description of the drawings, the same or similar components may be denoted by the same or similar reference numerals.

### DETAILED DESCRIPTION

Hereinafter, various embodiments of the disclosure will be described with reference to the accompanying drawings. However, it should be understood that this is not intended to limit the disclosure to a particular embodiment, and includes various modifications, equivalents, and/or alternatives of the embodiments of the disclosure.

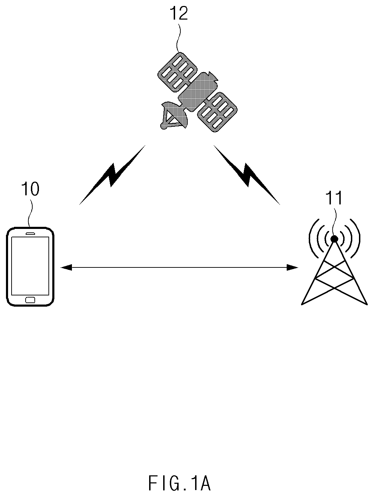

FIG. 1A illustrates a system including an electronic device, a base station, and a satellite, according to an embodiment.

Referring to FIG. 1A, the electronic device 10 may perform wireless communication with the base station 11. In an example, the electronic device 10 may transmit and receive signals associated with cellular communication while performing wireless communication with the base station 11. For example, the electronic device 10 may receive radio resource information of an uplink allocated to the electronic device 10 from the base station 11 to perform a voice call or data communication. In this case, the radio resource information may include information indicating a first signal associated with cellular communication. For example, the radio resource information may include information on a center frequency, a frequency band, and/or a second harmonic component of the first signal to identify the first signal.

According to an embodiment, the electronic device 10 may transmit and receive satellite signals from the satellite 12 to perform wireless communication with the satellite 12. For example, the electronic device 10 may receive satellite signals associated with a global navigation satellite system (GNSS) from the satellite 12 in order to perform a positioning operation using the satellite 12. In an example, the electronic device 10 may also receive satellite signals associated with satellite communication from the satellite 12 in order to conduct long-range satellite communication with an external electronic device using the satellite 12.

According to an embodiment, the electronic device 10 may simultaneously transmit and receive satellite signals and signals associated with cellular communication. For example, the electronic device 10 may receive signals associated with satellite communication while transmitting an uplink signal based on cellular communication.

According to an embodiment, in the operation of transmitting and receiving satellite signals, the electronic device 10 may additionally utilize third generation (3G), fourth generation (4G), and/or fifth generation (5G) network resources for fast and accurate signal transmission and reception. For example, in order to provide a location-based service, the electronic device 10 may identify an accurate location of a user by using a global positioning system (GPS) signal, and may provide a map service, a weather service, a road navigation service, and the like based on the location of the user by using long term evolution (LTE) signals'.

According to an embodiment, the electronic device 10 may receive radio resource information from the base station 11 and may identify control information set based on a second harmonic component of a first signal indicated by the radio resource information. For example, the radio resource information of the uplink allocated to the electronic device 10 may include information indicating the first signal, and the electronic device 10 may identify one or more frequency signals with a constant frequency value based on the second harmonic component of the first signal as the control information.

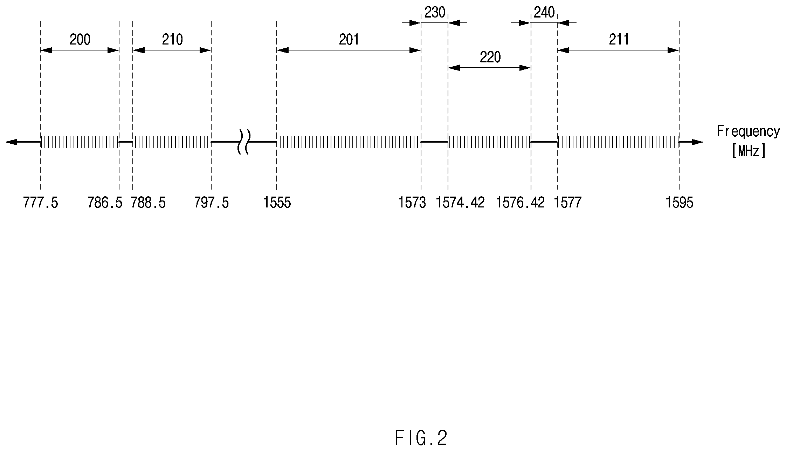

According to an embodiment, the electronic device 10 may simultaneously receive signals associated with cellular communication and satellite signals. In an example, when the electronic device 10 simultaneously receives a first signal associated with cellular communication and a second signal corresponding to the satellite signal, noise may occur between the first signal and the second signal due to signal interference. In this case, the electronic device 10 may adjust at least one signal using the control information identified based on the radio resource information. For example, the electronic device 10 may identify one or more frequency signals having a constant frequency value based on a second harmonic component of the first signal as control information, and may subtract the one or more frequency signals identified as the control information from the second signal received from the satellite 12. The relationship between the first signal, the harmonic component of the first signal, and the second signal will be described in detail below with reference to FIG. 2.

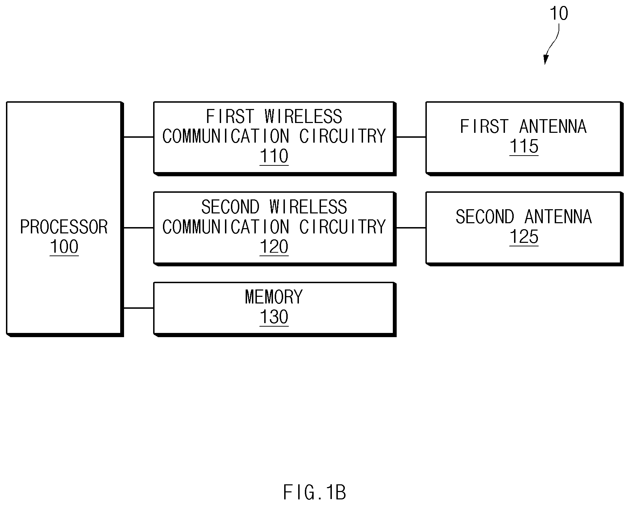

FIG. 1B illustrates a block diagram indicating a configuration of an electronic device according to an embodiment.

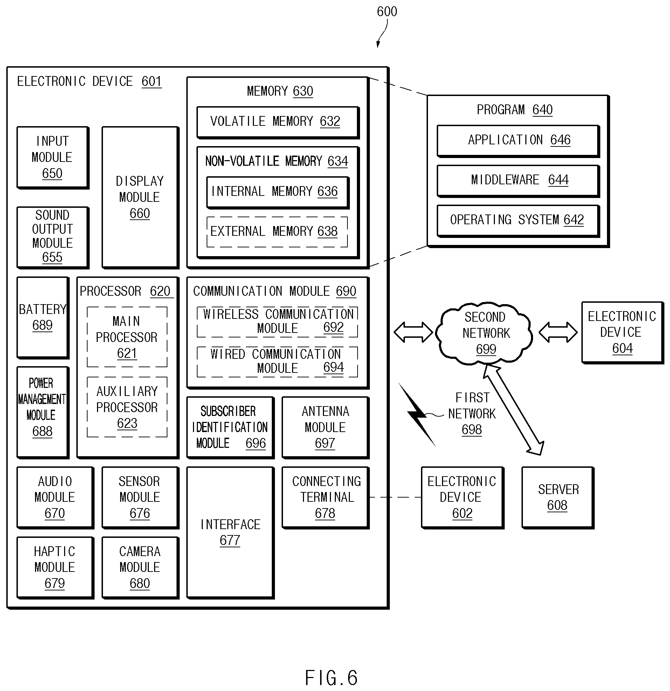

Referring to FIG. 1B, the electronic device 10 may include a processor 100, first wireless communication circuitry 110, a first antenna 115, second wireless communication circuitry 120, a second antenna 125, and/or memory 130. In an example, the electronic device 10 of FIG. 1B may correspond to the electronic device 601 of FIG. 6. Configurations of the electronic device 10 described below with respect to FIG. 1B are an example, and embodiments of the disclosure are not limited thereto. In an example, the electronic device 10 may not include at least some of components illustrated in FIG. 1B. In an example, the electronic device 10 may further include another component (e.g., a component of the electronic device 601 of FIG. 6) in addition to the components illustrated in FIG 1B. In an example, the processor may be implemented by a single chipset. In an example, the processor may correspond to at least one processor among a plurality of processors. The plurality of processors may be configured to perform operations of the electronic device 10 by executing, individually or collectively, instructions.

According to an embodiment, the processor 100 may be electrically or operatively connected to the first wireless communication circuitry 110, the second wireless communication circuitry 120, and the memory 130. The first wireless communication circuitry 110 may be electrically or operatively connected to the first antenna 115, and the second wireless communication circuitry 120 may be electrically or operatively connected to the second antenna 125. The operatively connected components may mean that the components are functionally connected or communicatively connected. For example, the operatively or electrically connected components may exchange data with each other. The processor 100 of FIG. 1B, for example, may correspond to the processor 620 of FIG. 6.

According to an embodiment, the processor 100 of the electronic device 10 may control various components of the electronic device 10. In this case, the processor 100 may correspond to an application processor (AP) and/or a communication processor (CP) included in the electronic device 10. The AP and/or the CP may be electrically connected to the first wireless communication circuitry 110, the second wireless communication circuitry 120, and/or the memory 130 of the electronic device 10. In an example, the processor 100 may use the first wireless communication circuitry 110 and/or the first antenna 115 to transmit and receive signals associated with cellular communication. For example, the processor 100 may receive radio resource information of an uplink allocated to the electronic device 10 using the first wireless communication circuitry 110.

According to one embodiment, the first wireless communication circuitry 110 may include at least one circuitry for transmitting and receiving signals associated with cellular communication. The first wireless communication circuitry 110 may include at least one circuitry configured to perform amplification of signals, noise cancellation of signals, and/or conversion of signals. In one example, the first wireless communication circuitry 110 may receive signals associated with cellular communication via the first antenna 115. The first wireless communication circuitry 100 may process the received signals and deliver them to the processor 100. The first wireless communication circuitry 110 may be configured to perform noise cancellation, amplification, and/or frequency conversion (e.g., down-conversion) on the received signals.

According to an embodiment, the first wireless communication circuitry 110 of the electronic device 10 may transmit signal associated with cellular communication via the first antenna 115. The first wireless communication circuitry 110 may process signals received from the processor 100 and may radiate the processed signal via the first antenna 115, The first wireless communication circuitry 110 may be configured to perform noise cancellation, amplification, and/or frequency conversion (e.g., up-conversion) on the signal received from the processor 100.

According to an embodiment, the first antenna 115 may include at least one radiator. The first antenna 115 may include the at least one radiator formed in at least a portion of a housing of the electronic device 10 and/or an inner substrate of the electronic device 10. The at least one radiator may be configured to have an electrical length or resonant frequency corresponding to a signal associated with cellular communication. For example, the first wireless communication circuitry 110 may receive a first signal from the base station 11 or a nearby electronic device via the first antenna 115.

According to an embodiment, the first wireless communication circuitry 110 of the electronic device 10 may transmit and receive signals associated with cellular communication by feeding the first antenna 115.

According to an embodiment, the second wireless communication circuitry 120 may include at least one circuitry for transmitting and receiving satellite signals. The second wireless communication circuitry 120 may include at least one circuitry configured to perform amplification of a signal, noise cancellation of a signal, and/or conversion of a signal. In an example, the second wireless communication circuitry 120 may receive satellite signals through the second antenna 125. The second wireless communication circuitry 120 may process the received signal and deliver the processed signal to the processor 100. The second wireless communication circuitry 120 may be configured to perform noise cancellation, amplification, and/or frequency conversion (e.g., down-conversion) on the received signal.

According to an embodiment, the second wireless communication circuitry 120 of the electronic device 10 may transmit satellite signals through the second antenna 125. The second wireless communication circuitry 120 may process a signal received from the processor 100 and may radiate the processed signal through the second antenna 125. The second wireless communication circuitry 120 may be configured to perform noise cancellation, amplification, and/or frequency conversion (e.g., up-conversion) on the signal received from the processor 100.

According to an embodiment, the second antenna 125 may include at least one radiator. The second antenna 125 may include the at least one radiator formed in at least a portion of the housing of the electronic device 10 and/or the inner substrate of the electronic device 10. The at least one radiator may be configured to have an electrical length or a resonance frequency corresponding to the satellite signal. For example, the second wireless communication circuitry 120 may receive a second signal from the satellite 12 or an external electronic device through the second antenna 125.

According to an embodiment, the second wireless communication circuitry 120 of the electronic device 10 may transmit and receive satellite signals by feeding the second antenna 125.

According to an embodiment, the processor 100 of the electronic device 10 may use the second wireless communication circuitry 120 and/or the second antenna 125 to transmit and receive satellite signals. For example, the processor 100 may receive a second signal corresponding to a GPS signal using the second wireless communication circuitry 120.

According to an embodiment, the memory 130 may store frequency information, information on second harmonic components, and/or tone signal information of signals received by the electronic device 10. In an example, the memory 130 may store one or more pieces of tone signal information. The tone signal information may include information on frequencies and/or amplitudes of signals. For example, one or more pieces of tone signal information (e.g., information on a tone signal of 1559.32 MHz, 1559.22 MHz, 1559.12 MHz, 1559.02 MHz, 1558.92 MHz, 1558.82 MHz, 1558.72 MHz, 1558.62 MHz, and/or 1558.52 MHz) corresponding to the second harmonic components of the first signals may be stored in the memory 130.

According to an embodiment, the processor 100 of the electronic device 10 may execute instructions stored in the memory 130. In an example, the processor 100 may identify one or more pieces of control information stored in the memory 130 and adjust the second signal based on the identified control information.

FIG. 2 illustrates a frequency band of signals transmitted and received by an electronic device according to an embodiment.

Referring to FIG. 2, the electronic device 10 may transmit and receive signals of a first frequency band 200, a third frequency band 210, a second harmonic band 201 of the first frequency band, a second harmonic band 211 of the third frequency band, and/or a second frequency band 220.

According to an embodiment, the electronic device 10 may simultaneously receive signals of different frequency bands. For example, the electronic device 10 may utilize Assisted GPS (A-GPS) using a frequency band corresponding to LTE band 13 and/or LTE band 14 (e.g., 777.5 MHz to 786.5 MHz and/or 788.5 MHz to 797.5 MHz) for fast and accurate GPS signal transmission and reception. For example, the electronic device 10 may receive signals of the second frequency band 220 while transmitting an uplink signal of the first frequency band 200.

According to an embodiment, the center frequency of the first signal transmitted/received by the electronic device 10 may be included in the first frequency band 200. For example, the first signal may be a signal associated with cellular communication and may correspond to a signal transmitted/received for cellular communication when the electronic device 10 receives uplink radio resource information corresponding to the LTE band 13 from the base station 11. In an example, the first frequency band 200 may have a band of 777.5 MHz to 786.5 MHz, and the center frequency of the first signal may correspond to 782 MHz.

According to an embodiment, the electronic device 10 may receive radio resource information of an uplink allocated to the electronic device 10 from the base station 11 using the first wireless communication circuitry 110. The center frequency of the first signal indicated in the radio resource information may be included in a frequency band corresponding to the LTE band 13.

According to an embodiment, a secondary harmonic component for a center frequency of the first signal transmitted and received by the electronic device 10 may be included in the secondary harmonic band 201 of the first frequency band. The secondary harmonic band 201 of the first frequency band may correspond to a frequency band corresponding to twice the first frequency band 200. For example, the secondary harmonic band 201 may have a band of 1555 MHz to 1573 MHz, and the secondary harmonic component of the center frequency of the first signal may have a frequency of 1564 MHz. In an example, the secondary harmonic component of the first signal may correspond to a secondary harmonic component generated based on a signal transmitted and received for cellular communication when the electronic device 10 is allocated with uplink radio resource information corresponding to LTE band 13 from the base station 11.

According to an embodiment, the electronic device 10 may receive radio resource information of an uplink allocated to the electronic device 10 from the base station 11 using the first wireless communication circuitry 110. A second harmonic component of the center frequency of the first signal indicated by the radio resource information may be included in a frequency band of 1555 MHz to 1573 MHz.

According to an embodiment, the center frequency of the first signal transmitted/received by the electronic device 10 may be included in the third frequency band 210. For example, the first signal may be a signal associated with cellular communication, and may correspond to a signal transmitted/received for cellular communication when the electronic device 10 is allocated with uplink radio resource information corresponding to the LTE band 14 from the base station 11. In an example, the third frequency band 210 may correspond to a band of 788.5 MHz to 797.5 MHz, and the center frequency of the first signal may correspond to 793 MHz.

According to an embodiment, the electronic device 10 may receive radio resource information of an uplink allocated to the electronic device 10 from the base station using the first wireless communication circuitry 110. The center frequency of the first signal indicated by the radio resource information may be included in a frequency band corresponding to the LTE band 14.

According to an embodiment, the secondary harmonic component for the center frequency of the first signal transmitted and received by the electronic device 10 may be included in the secondary harmonic band 211 of the third frequency band. The secondary harmonic band 211 of the third frequency band may correspond to a frequency band corresponding to twice the third frequency band 210. For example, the secondary harmonic band 211 of the third frequency band may have a band of 1577 MHz to 1595 MHz, and the secondary harmonic component of the center frequency of the first signal may have a frequency of 1586 MHz. In an example, the secondary harmonic component of the first signal may correspond to a secondary harmonic component generated based on a signal transmitted and received for cellular communication when the electronic device 10 is allocated with uplink radio resource information corresponding to the LTE band 14 from the base station 11.

According to an embodiment, the electronic device 10 may receive radio resource information of an uplink allocated to the electronic device 10 from the base station 11 by using the first wireless communication circuitry 110. A second harmonic component of the center frequency of the first signal indicated by the radio resource information may be included in a frequency band of 1577 MHz to 1595 MHz.

According to an embodiment, the center frequency of the second signal received by the electronic device 10 may be included in the second frequency band 220. For example, the second frequency band 220 may have a band of 1574.42 MHz to 1576.42 MHz, and the center frequency of the GNSS signal may correspond to 1575.42 MHz. For example, the second signal may be a signal associated with the GNSS and may correspond to a signal received for GNSS communication when the electronic device 10 receives GNSS information corresponding to the GPS L1 from the satellite 12. In this case, the second frequency band 220 may correspond to a frequency band corresponding to the GPS L1.

According to an embodiment, the electronic device 10 may receive a satellite signal from the satellite 12 using the second wireless communication circuitry 120. For example, the center frequency of the satellite signal received by the second wireless communication circuitry 120 may be included in a frequency band corresponding to GPS L1. In this case, the frequency band corresponding to GPS L1 may have a center frequency of 1575.42 MHz and a bandwidth of 2 MHz.

According to an embodiment, the secondary harmonic band 201 of the first frequency band and the second frequency band 220 may include an adjacent frequency band 230. For example, the adjacent frequency band 230 with a bandwidth of 1.42 MHz may be included between the second harmonic band 201 of the first frequency band and the second frequency band 220.

According to an embodiment, when the electronic device 10 is transmitting and receiving the first signal and the second signal, signal interference may occur in the vicinity of the adjacent frequency band 230 of the second harmonic band 201 of the first frequency band and the second frequency band 220.

According to an embodiment, the secondary harmonic band 211 of the third frequency band and the second frequency band 220 may include an adjacent frequency band 240. For example, the adjacent frequency band 240 with a bandwidth of 0.58 MHz may be included between the second harmonic band 211 of the third frequency band and the second frequency band 220.

According to an embodiment, when the electronic device 10 is transmitting and receiving the first signal and the second signal, signal interference may occur in the vicinity of the adjacent frequency band 240 of the second harmonic band 211 of the third frequency band and the second frequency band 220.

According to an embodiment, when the electronic device 10 transmits and receives the first signal and the second signal, a frequency range where the aforementioned signal interference may occur may vary depending on a frequency band of the second signal. For example, if the second signal is included in a frequency band having a center frequency of 1575.42 MHz and a bandwidth of MHz, the secondary harmonic band 201 of the first frequency band may have a frequency band of 1573 MHz to 1573.42 MHz adjacent to the frequency band where the second signal belongs, and the secondary harmonic band 211 of the third frequency band may have a frequency band of 1576.42 MHz to 1577 MHz adjacent to the frequency band where the second signal belongs. In this case, the electronic device 10 may receive signal interference in the vicinity of the adjacent frequency band. The same can be understood for the vicinity of the frequency band where the second sign belongs and the adjacent frequency band.

According to an embodiment, the first signal may be included in the first frequency band 200 and/or the third frequency band 210, and the second signal may be included in the second frequency band 220.

According to an embodiment, the second antenna 125 may be configured to transmit and receive signals of the second frequency band 220, and a second harmonic component of the first signal may be included in or adjacent to the second frequency band 220.

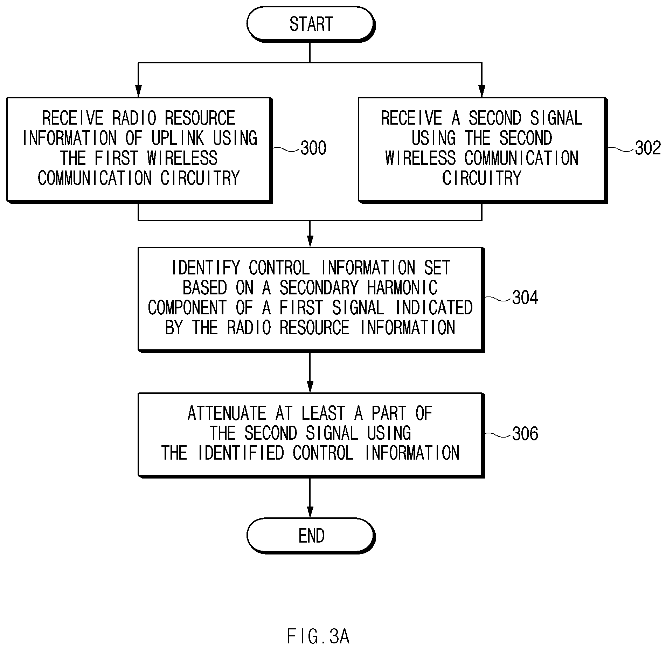

FIG. 3A is a flowchart illustrating operations of an electronic device according to an embodiment.

Referring to FIG. 3A, the electronic device 10 may receive radio resource information of an uplink and a second signal, and after identifying control information indicated by the radio resource information, attenuate at least part of the second signal based on the identified control information.

According to an embodiment, in operation 300, the processor 100 of the electronic device 10 may receive uplink radio resource information from the base station 11 by using the first wireless communication circuitry 110. For example, the processor 100 may receive the uplink radio resource information allocated to the electronic device 10 from the base station 11 by using first wireless communication circuitry 110 in order to transmit and receive signals associated with cellular communication. In this case, the uplink radio resource information may include information on the number of resource blocks (RBs) associated with the uplink and/or the positions of the resource blocks.

According to an embodiment, the resource block may include resource block setting configuration (RB setting configuration) indicating the number, size, and start of the resource block to be used in the uplink in the frequency domain. For example, the radio resource information of the uplink allocated to the electronic device 10 may include information corresponding to start RB=0 and number of RBs=12 as information for the resource block to be used in the uplinks.

According to an embodiment, the radio resource information of the uplink may indicate a radio resource corresponding to the LTE band 13 and/or the LTE band 14. In an example, the electronic device 10 may identify the radio RB setting configuration information allocated in the uplink channel, and may identify the uplink center frequency transmitted by a terminal based on corresponding information. For example, the processor 100 may, by identifying the radio resource block setting configuration information allocated to the electronic device 10, identify information corresponding to the uplink channel=23230, the starting RB=0, and the number of RBs=12, and may identify the uplink center frequency as 778.58 MHz. In an example, the processor 100 may calculate the edge frequency of a transmitted signal based on the radio resource block information. For example, after identifying the uplink center frequency as 1778.58 MHz, the processor 100 may obtain a second harmonic component (e.g., 1557.16 MHz) of the uplink center frequency, and may calculate 1559.32 MHz as the edge frequency of the transmitted signal with a difference value (offset) of 0.16 MHz.

According to an embodiment, in operation 302, the processor 100 of the electronic device 10 may receive a second signal from the satellite 12 using the second wireless communication circuitry 120. For example, the processor 100 may receive the second signal from the satellite 12 using second wireless communication circuitry 120. In an example, the second signal may include a signal associated with GNSS. The signal associated with the GNSS may include information on a relative position between the electronic device 10 and the satellite 12, an amount of signal delay between the electronic device 10 and the satelite 12, and/or a time at which a signal is transmitted and received. In an example, a frequency band of the second signal associated with the GNSS may be adjacent to a frequency band corresponding to the LTE band 13 and/or the LTE band 14, or may include a frequency band common to a frequency band corresponding to LTE band 13 and/or LTE band 14.

According to an embodiment, in operation 304, the processor 100 of the electronic device 10 may identify control information set based on the second harmonic component of the first signal indicated by the radio resource information. For example, the processor 100 may identify the second harmonic component of the first signal indicated by the uplink radio resource information received in operation 300, and may identify the control information set based on the identified second harmonic component. In this case, the control information may be frequency information generated by the processor 100 based on the identified second harmonic components.

According to an embodiment, in operation 304, the processor 100 of the electronic device 10 may identify the control information stored in the memory 130 based on the second harmonic component of the first signal indicated by the radio resource information. For example, the processor 100 may extract, from information stored in the memory 130, information corresponding to the second harmonic component of the first signal, which is indicated by the radio resource information, as the control information. In this case, the control information may be frequency information stored corresponding to the second harmonic component in the information stored in the memory 130.

According to an embodiment, in operation 306, the processor 100 of the electronic device 10 may attenuate at least a portion of the second signal using the identified control information. For example, the processor 100 may attenuate at least a portion of the second signal received in operation 302 using the control information identified in operation 304. In this case, the operation of attenuating the second signal may be an operation of subtracting a frequency interval corresponding to the control information from a frequency interval included in the second signal.

According to an embodiment, the operation of attenuating at least a portion of the second signal using the control information may utilize a customs adaptive interference cancellation (CAIC) scheme. The CAIC scheme may identify an interference region of the received signal, generate an interference mimic signal corresponding to the interference region, and then subtract the interference mimic signal from the received signal, thereby performing an operation of attenuating an interference component of the received signal. For example, in case of the interference component of the GPS signal being attenuated according to the CAIC scheme, the processor 100 may generate J^_n which is a component mimicking the GPS interference component, assuming the GPS signal received by the electronic device 10 is denoted by S_n, the GPS interference component is denoted by J_n, and the noise component is denoted as N_n. The processor 100 may perform an operation of causing the second signal to correspond to a calculation equation of S_n + (J_n - J^_n) + N_n according to the CAIC scheme.

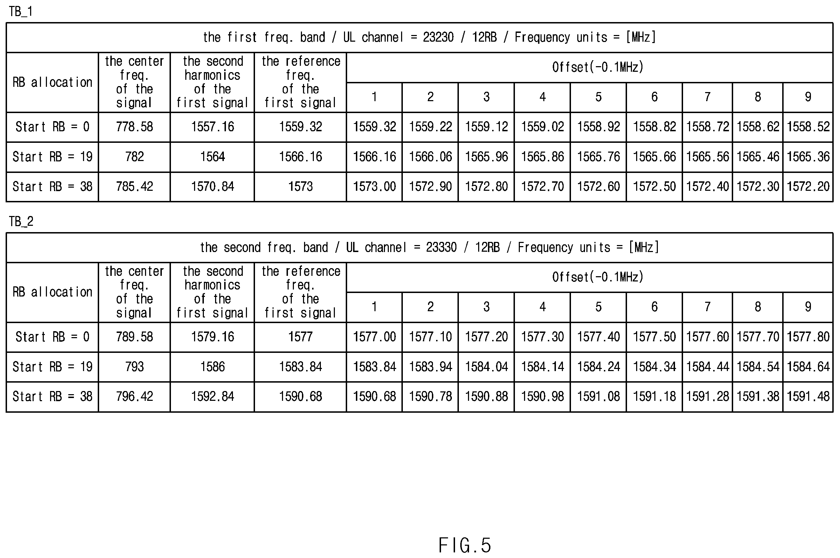

According to an embodiment, the processor 100 of the electronic device 10 may identify an interference region of a received signal and generate an interference mimic signal corresponding to the interference region. For example, the processor 100 may generate the interference mimic signal based on a signal configuration information table (e.g., TB_1 of FIG. 5) of the received signal, and subtract the interference mimic signal from the second signal to attenuate a noise component of the second signal. In an example, the processor 100 may dynamically identify the interference region based on a type of the received signal.

According to an embodiment, the processor 100 of the electronic device 10 may be configured to receive radio resource information of an uplink allocated to the electronic device 10 using the first wireless communication circuitry 110, receive a second signal using the second wireless communication circuitry 120, identify control information set based on a second harmonic component of the first signal indicated by the radio resource information, and attenuate at least a portion of the second signal using the control information. In an example, the control information may be information included in a signal configuration information table of a received signal when the processor 100 performs a CAIC operation.

According to an embodiment, the control information may include information of one or more control frequency signals associated with a second harmonic component of the first signal.

According to an embodiment, the radio resource information may include information on a number of resource blocks associated with the uplink and/or positions of the resource blocks.

According to an embodiment, the processor 100 of the electronic device 10 may be configured to attenuate at least a portion of the second signal using the one or more control frequency signals.

According to an embodiment, the processor 100 of the electronic device 10 may be configured to attenuate at least a portion of the second signal using the control information in case that the second wireless communication circuitry 120 is activated while transmitting and receiving the first signal based on the radio resource information.

According to an embodiment, a control method of the electronic device 10 may include: receiving, by using the first wireless communication circuitry 110, radio resource information of an uplink; receiving, by using the second wireless communication circuitry 120, a second signal; identifying control information set based on a second harmonic component of the first signal indicated by the radio resource information; and attenuating at least a portion of the second signal using the control information.

According to an embodiment, the attenuating of at least a portion of the second signal may include at least one of: when a center frequency of the first signal is identified as a frequency lower than a center frequency of the second signal, generating a control frequency signal having a negative frequency difference value based on a highest edge frequency among secondary harmonic components of the first signal to attenuate at least a portion of the second signal, or when the center frequency of the first signal is recognized as a frequency higher than the center frequency of the second signal, generating a control frequency signal having a positive frequency difference value based on a lowest edge frequency among secondary harmonics components of the first signal to attenuated at least a portion of the second signal.

According to an embodiment, the attenuating at least a portion of the second signal may include attenuating at least a portion of a second signal using one or more control frequency signals.

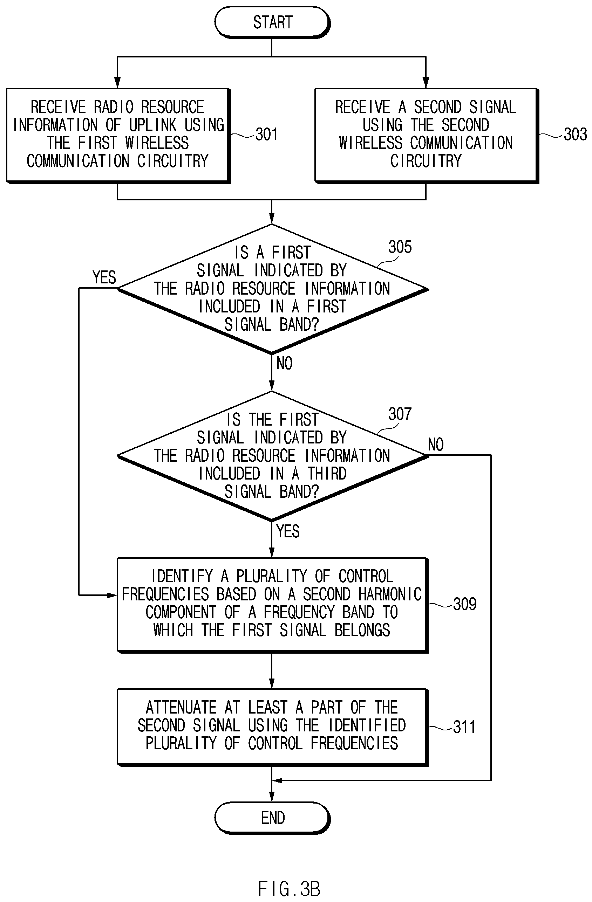

FIG. 3B is a flowchart illustrating operations of an electronic device according to an embodiment, the operations further including determining a frequency band of a first signal.

Referring to FIG. 3B, the electronic device 10 may receive the radio resource information of the uplink and the second signal, determine whether the first signal is included in the first frequency band 200 or the third frequency band 210, and then attenuate at least a portion of the second signal using one or more control frequencies set based on the radio resource information.

According to an embodiment, in operation 301, the processor 100 of the electronic device 10 may receive uplink radio resource information from the base station 11 using the first wireless communication circuitry 110. For example, the processor 100 may receive the uplink radio resource information (e.g., information included in an uplink grant) allocated to the electronic device 10 from the base station 11 using the first wireless communication circuitry 110 in order to transmit and receive signals associated with cellular communication. In this case, the uplink radio resource information may include information on the number of resource blocks associated with the uplink and/or the positions of the resource blocks. In an example, the first signal associated with the cellular communication may be included in the first frequency band 200 and/or the third frequency band 210. In addition, the uplink radio resource information may correspond to the LTE band 13 and/or the LTE band 14.

According to an embodiment, in operation 303, the processor 100 of the electronic device 10 may receive a second signal from the satellite 12 by using the second wireless communication circuitry 120. For example, the processor 100 may receive the second signal associated with GNSS from the satellite 12 by using the second wireless communication circuitry 120. In this case, the second signal associated with the GNSS may include information about a relative position between the electronic device 10 and the satellite 12, a signal delay amount between the electronic device 10 and the satelite 12, and/or a time at which a signal is transmitted and received. In an example, a center frequency of the second signal may be included in the second frequency band 220, and the frequency band of the second signal may be adjacent to a frequency band corresponding to the LTE band 13 and/or the LTE band 14 or may include a frequency interval common to a frequency band corresponding to the LTE band 13 and/or the LTE band 14.

According to an embodiment, in operation 305, the processor 100 of the electronic device 10 may determine whether the first signal indicated by the radio resource information is included in the first frequency band 200. For example, the processor 100 may determine whether the uplink radio resource information received in operation 301 is information corresponding to the LTE band 13. In this case, a frequency band corresponding to the LTE band 13 may correspond to the first frequency band 200, and the processor 100 may determine whether a center frequency of the first signal indicated by the radio resource information is included in the LTE band 13.

According to an embodiment, when the first signal indicated by the radio resource information is not included in the first frequency band (e.g., NO in operation 305), the processor 100 of the electronic device 10 may determine, in operation 307, whether the first signal indicated by the radio resource information is included in the third frequency band 210. For example, the processor 100 may determine whether the uplink radio resource information received in operation 301 is information corresponding to the LTE band 14. In this case, a frequency band corresponding to the LTE band 14 may correspond to the third frequency band 210, and the processor 100 may determine whether a center frequency of the first signal indicated by the radio resource is included in the LTE band 14.

According to an embodiment, when the first signal indicated by the radio resource information is included in the first frequency band 200 (e.g., YES in operation 305), in operation 309, the processor 100 of the electronic device 10 may identify one or more control frequencies based on a second harmonic component of the first signal. For example, the processor 100 may identify the second harmonic component for the first signal indicated by the uplink radio resource information received in operation 301, and may identify the one or more control frequencies based on the identified second harmonic component. In this case, the second harmonic component for the first signal may be included in the second harmonic band 201 of the first frequency band. In an example, the one or more control frequencies may be frequency information generated by the processor 100 based on the identified second harmonic component.

According to an embodiment, in operation 309, the processor 100 of the electronic device 10 may identify the one or more control frequencies stored in the memory 130 based on the second harmonic component of the first signal indicated by the radio resource information. For example, the processor 100 may extract, from the information stored in the memory 130, one or more control frequencies corresponding to the second harmonic component of the first signal, which is indicated by the radio resource information, as control information. In this case, the second harmonic component of the first signal may be included in the second harmonic band 201 of the first frequency band, and the extracted one or more control frequencies may be one or more frequencies having a constant frequency difference from the second harmonic component.

According to an embodiment, in operation 311, the processor 100 of the electronic device 10 may attenuate at least a portion of the second signal using the identified one or more control frequencies. For example, the processor 100 may attenuate at least a portion of the second signal received in operation 303 using the at least one control frequency identified in operation 309. In this case, the operation of attenuating the second signal may be an operation of subtracting a frequency corresponding to the identified at least one control frequency from among frequencies included in the second signal.

According to an embodiment, in operation 307, the processor 100 of the electronic device 10 may determine whether the first signal indicated by the radio resource information is included in the third frequency band 210. For example, the processor 100 may determine whether the uplink radio resource information received in operation 301 is information corresponding to the LTE band 14. In this case, a frequency band corresponding to the LTE band 14 may correspond to the third frequency band 210, and the processor 100 may determine whether a center frequency of the first signal indicated by the radio resource information is included in the LTE band 14.

According to an embodiment, when the first signal indicated by the radio resource information is not included in the third frequency band (e.g., NO in operation 307), the processor 100 of the electronic device 10 may end the process.

According to an embodiment, when the first signal indicated by the radio resource information is included in the third frequency band 210 (e.g., YES in operation 307), in operation 309, the processor 100 of the electronic device 10 may identify one or more control frequencies based on a second harmonic component of the first signal. For example, the processor 100 may identify a second harmonic component of the first signal indicated by the radio resource information of the uplink received in operation 301, and may identify one or more control frequencies based on the identified second harmonic component. In this case, the second harmonic component for the first signal may be included in the second harmonic band 211 of the third frequency band. In one example, the one or more control frequencies may be frequency information generated by the processor 100 based on the identified second harmonic component. According to an embodiment, in operation 309, the processor 100 of the electronic device 10 may identify the one or more control frequencies stored in the memory 130 based on the second harmonic component of the first signal indicated by the radio resource information. For example, the processor 100 may extract, from information stored in the memory 130, the one or more control frequencies corresponding to the second harmonic component of the first signal indicated by the radio resource information as the control information. In this case, the second harmonic component of the first signal may be included in the second harmonic band 211 of the third frequency band, and the extracted one or more control frequencies may be one or more frequencies having a constant frequency difference from the second harmonic component.

According to an embodiment, in operation 309, the processor 100 of the electronic device 10 may identify the one or more control frequencies in different manners based on whether the first signal indicated by the radio resource information is included in the first frequency band 200 or the third frequency band 210. In an example, when the first signal is included in the first frequency band, the processor 100 may identify, as the control frequencies, one or more frequencies that are lower than a reference frequency by a constant frequency difference, where the reference frequency corresponds to a second harmonic component of a center frequency of the first signal. For example, when the processor 100 receives the first signal corresponding to the LTE band 13 based on the allocated radio resource information, the processor 100 may identify a secondary harmonic component of a center frequency of the first signal as 1564 MHz, identify a reference frequency from an edge frequency 1566.16 MHz which is +2.16 MHz from the identified 1564 MHz, and identify one or more frequencies (e.g., 1566.06 MHz, 1565.96 MHz) lower than the reference frequency by a difference value of 0.1 MHz as the control frequencies.

According to an embodiment, when the first signal is included in the third frequency band 210, the processor 100 may identify, as control frequencies, one or more frequencies that are increased by a constant frequency difference value from a reference frequency using a frequency corresponding to a second harmonic component of a center frequency of the first signal as the reference frequency. For example, when the processor 100 receives the first signal corresponding to the LTE band 14 based on the allocated radio resource information, the processor 100 may identify a secondary harmonic component of a center frequency of the first signal as 1586 MHz, identify a reference frequency from an edge frequency 1583.84 MHz which is -2.16 MHz from the identified 1586 MHz, and identify one or more frequencies (e.g., 1583.84 MHz, 1583.94 MHz) higher than the reference frequency by a difference value of 0.1 MHz as the control frequencies.

According to an embodiment, the processor 100 of the electronic device 10 may change the determination order of operation 305 and operation 307. In an example, when the first signal indicated by the radio resource information is included in the third frequency band, the processor 100 may identify the one or more control frequencies based on the second harmonic component of the first signal. In addition, when the first signal indicated by the radio resource information is not included in the third frequency band, a processor 100 may determine whether the first signal indicated by the radio resource information is included in the first frequency band. In another example, when the first signal indicated by the radio resource information is included in the first frequency band, the processor 100 may identify the one or more control frequenties based on the second harmonic component of the first signal. In addition, when the first signal is not included in the first frequency band, the processor 100 may end the process.

According to an embodiment, the electronic device 10 may further include memory electrically connected to the processor 100, and the memory may store one or more pieces of control information set based on the radio resource information.

According to an embodiment, the processor 100 of the electronic device 10 may determine whether the first signal is included in the first frequency band and/or the third frequency band.

According to an embodiment, the processor 100 of the electronic device 10 may identify one or more control frequency signals included in the control information based on a frequency band in which the first signal is included.

According to an embodiment, the processor 100 of the electronic device 10 may perform operation 305 and operation 307 simultaneously. For example, when the first signal indicated by the radio resource information is included in the first frequency band 200 and the third frequency band 210, the processor 100 may identify one or more control frequencies based on a second harmonic component of the frequency band in which the first signal is included, and may attenuate at least a portion of the second signal using the identified one or more control frequencies. In an example, when the first signal is included in the first frequency band 200, the processor 100 may attenuate at least a portion of the second signal by using the identified one or more control frequencies and then determine whether the first signal is included in the third frequency band 210. In an example, when the first signal is included in the third frequency band 210, the processor 100 may attenuate at least a portion of the second signal by using the identified one or more control frequencies and then determine whether the first signal is included in the first frequency band 200.

FIG. 3C is a flowchart illustrating operations of an electronic device according to another embodiment.

Referring to FIG. 3C, the electronic device 10 may receive the radio resource information of the uplink, determine whether the first signal is included in the first frequency band or the third frequency band, and attenuate at least a portion of the second signal using the one or more control frequencies set based on the radio resource information after determining whether the second wireless communication circuitry is activated.

According to an embodiment, in operation 321, the processor 100 of the electronic device 10 may receive the uplink radio resource information from the base station 11 using the first wireless communication circuitry 110. For example, the processor 100 may receive uplink radio resource information allocated to the electronic device 10 from the base station 11 using the first wireless communication circuitry 110 to transmit and receive signals associated with cellular communication. In this case, the uplink radio resource information may include information on the number of resource blocks associated with the uplink and/or the positions of the resource blocks. In an example, the uplink radio resource information may correspond to the LTE band 13 and/or the LTE band 14.

According to an embodiment, in operation 323, the processor 100 of the electronic device 10 may determine whether the first signal indicated by the radio resource information is included in the first frequency band 200. For example, the processor 100 may determine whether the uplink radio resource information received in operation 321 is information corresponding to the LTE band 13. In this case, the frequency band corresponding to the LTE band 13 may correspond to the first frequency band 200, and the processor 100 may determine whether a center frequency of the first signal indicated by the radio resource information is included in the LTE band 13.

According to an embodiment, when the first signal indicated by the radio resource information is included in the first frequency band 200 (e.g., YES in operation 323), the processor 100 of the electronic device 10 may determine, in operation 327, whether a second signal is received using the second wireless communication circuitry. For example, the processor 100 may determine whether the second signal associated with the GNSS is received from the satellite 12 using the second wireless communication circuitry 120. In this case, the second signal associated with the GNSS may include information on a relative position between the electronic device 10 and the satellite 12, an amount of signal delay between the electronic device 10 and the satelite 12, and/or a time at which a signal is transmitted and received. In an example, a frequency band of the second signal may include a frequency interval adjacent to a frequency band corresponding to the LTE band 13 and/or the LTE band 14, or a frequency interval common to a frequency band corresponding to the LTE band 13 and/or the LTE band 14.

According to an embodiment, when the second signal is not received using the second wireless communication circuitry (e.g., NO in operation 327), the processor 100 of the electronic device 10 may end the process.

According to an embodiment, when the second signal is received using the second wireless communication circuitry (e.g., YES in operation 327), in operation 329, the processor 100 of the electronic device 10 may identify one or more control frequencies based on the secondary harmonic component of the first signal. For example, the processor 100 may identify the secondary harmonic component for the first signal indicated by the uplink radio resource information received in operation 321, and may identify the one or more control frequencies based on the identified secondary harmonic component. In this case, the secondary harmonic component of the first signal may be included in the secondary harmonic band 201 of the first frequency band, and the identified one or more control frequencies may be frequency information generated by the processor 100 based on the identified secondary harmonic component.

According to an embodiment, in operation 329, the processor 100 of the electronic device 10 may identify one or more control frequencies stored in the memory 130 based on the second harmonic component of the first signal indicated by the radio resource information. For example, the processor 100 may extract, from information stored in the memory 130, one or more control frequencies corresponding to the second harmonic component of the first signal, which is indicated by the radio resource information, as the control information. In this case, the second harmonic component of the first signal may be included in the second harmonic band 201 of the first frequency band, and the extracted one or more control frequencies may be one or more frequencies having a constant frequency difference from the second harmonic component.

According to an embodiment, in operation 331, the processor 100 of the electronic device 10 may attenuate at least a portion of the second signal using the identified one or more control frequencies. For example, the processor 100 may attenuate at least a portion of the second signal received in operation 303 using the one or more control frequencies identified in operation 329. In this case, the operation of attenuating the second signal may include an operation of reducing a magnitude of a signal of a frequency component corresponding to the identified one or more control frequency among frequencies included in the second signal. For example, the processor 100 may divide a frequency band of the second signal to be attenuated into one or more frequency intervals. The processor 100 may perform signal attenuation for the one or more frequency intervals using one or more control frequencies (e.g., one or more tone signals), respectively, stored in the memory 130.

According to an embodiment, when the first signal indicated by the radio resource information is not included in the first frequency band (e.g., NO in operation 323), the processor 100 of the electronic device 10 may determine, in operation 325, whether the first signal indicated by the radio resource information is included in the third frequency band 210. For example, the processor 100 may determine whether the uplink radio resource information received in operation 321 is information corresponding to the LTE band 14. In this case, the frequency band corresponding to the LTE band 14 may correspond to the third frequency band 210, and the processor 100 may determine whether a center frequency of the first signal indicated by the radio resource is included in the LTE band 14.

According to an embodiment, when the first signal indicated by the radio resource information is not included in the third frequency band (e.g., NO in operation 325), the processor 100 of the electronic device 10 may end the process.

According to an embodiment, when the first signal indicated by the radio resource information is included in the third frequency band 210 (e.g., YES in operation 325), the processor 100 of the electronic device 10 may determine, in operation 327, whether the second signal is received using the second wireless communication circuitry. Operation 327 and subsequent operations 329 to 331 may operate similarly to the above.

According to an embodiment, the processor 100 of the electronic device 10 may change the determination order of operation 323 and operation 325. In an example, when the first signal indicated by the radio resource information is included in the third frequency band, the processor 100 may identify the one or more control frequencies based on the second harmonic component of the first signal. In addition, when the first signal indicated by the radio resource information is not included in the third frequency band, a processor 100 may determine whether the first signal indicated by the radio resource information is included in the first frequency band. In another example, when the first signal indicated by the radio resource information is included in the first frequency band, the processor 100 may identify the one or more control frequencies based on the second harmonic component of the first signal. In addition, when the first signal is not included in the first frequency band, a processor 100 may end the process.

According to an embodiment, the processor 100 of the electronic device 10 may be configured to attenuate at least a portion of the second signal using the control information when the second wireless communication circuitry 120 is activated after receiving the radio resource information.

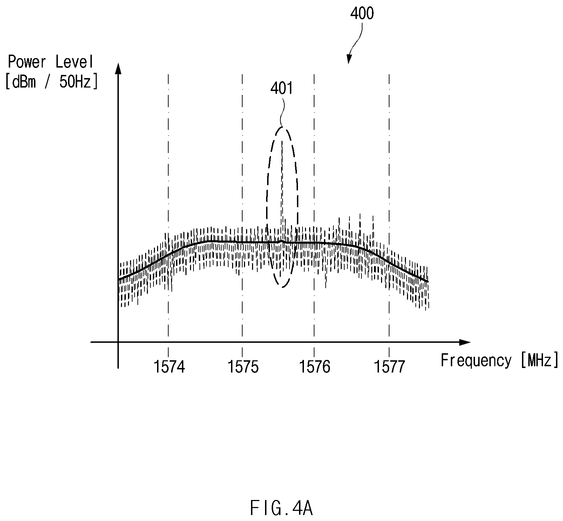

FIG. 4A illustrates the signal strength according to the frequency of a signal received by the electronic device according to an embodiment, when the operation 301 of FIG. 3A is performed.

Referring to FIG. 4A, the electronic device 10 may receive a second signal from the satellite 12, and the second signal may include a center frequency. In this case, the electronic device 10 may not experience signal interference by a signal other than the second signal. In an example, the electronic device 10 may not receive an external signal that may cause interference with the second signal while receiving the second signal. For example, the electronic device 10 may be not transmit and receive a first signal while receiving the second signal. The frequency graph 400 of FIG. 4A may be a frequency graph when the electronic device 10 receives the second signal and signal interference does not occur by a signal other than the second signal.

According to an embodiment, the processor 100 of the electronic device 10 may receive the second signal from the satellite 12 by using the second wireless communication circuitry 120, and the received second signal may be included in the second frequency band 220. In this case, the center frequency of the second signal may correspond to a frequency corresponding to the highest frequency intensity 401 among the frequency intensities of the second frequency band 220. For example, the second signal may be included in a frequency band of 1574.42 MHz to 1576.42 MHz, and the center frequency of the second signal corresponds to a frequency having the highest frequency intensity 401 among the frequency intensities of the frequency band of 1574.42 MHz to 1576.42 MHz.

According to an embodiment, a frequency of a satellite signal may be included in the second frequency band 220 including the second signal, and the second frequency band may correspond to 1574.42 MHz to 1576.42 MHz. In an example, a center frequency of the second signal may coincide with a center frequency of the second frequency band 220. In this case, the center frequency of the second signal and the center frequency of the second frequency band 220 may correspond to 1575.42 MHz.

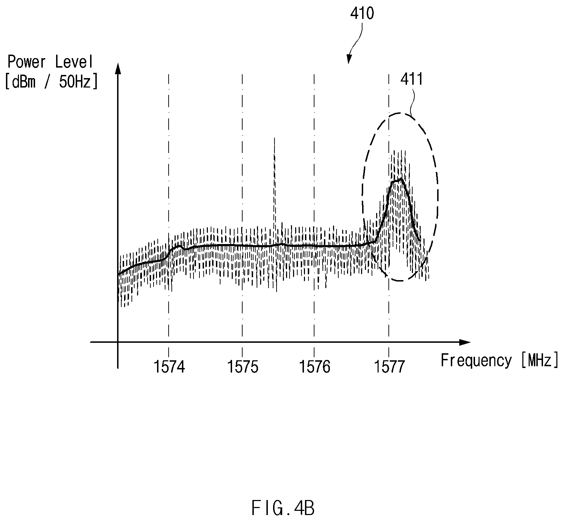

FIG. 4B illustrates the signal strength according to the frequency of a signal received by the electronic device according to an embodiment, when the operation 301 and the operation 303 of FIG. 3A are simultaneously performed.

Referring to FIG. 4B, the electronic device 10 may receive the second signal from the satellite 12 and a signal other than the second signal. In this case, signal interference caused by the second signal and the signal other than the second signal may occur in a signal reception operation of the electronic device 10. The frequency graph 410 of FIG. 4B may be a frequency graph in a case where the signal interference occurs due to the signal other than the second signal (e.g., a second harmonic component of a first signal corresponding to the LTE band 14) when the electronic device 10 receives the second signal.

According to an embodiment, the processor 100 of the electronic device 10 may receive the second signal from the satellite 12 using the second wireless communication circuitry 120, and the received second signal may be included in the second frequency band 220. The processor 100 may receive a first signal associated with cellular communication from the base station 11 simultaneously using the first wireless communication circuitry 110, and the received first signal may be included in the first frequency band 200. In this case, signal interference may occur between a secondary harmonic component of the first signal and the second signal. An interval in which the signal interference occurs may correspond to a frequency band adjacent to and/or common to the secondary harmonic component of the first signal and the second signal. For example, the second signal may be included in a frequency band of 1574.42 MHz to 1576.42 MHz, and the secondary harmonic component of the first signal corresponding to the LTE band 13 may be included in a frequency band of 1555 MHz to 1573 MHz. In this case, signal interference may occur in an adjacent interval of the band of 1573 MHz to 1574.42 M Hz, which is an adjacent frequency band of the secondary harmonic component of the first signal and the second signal.

According to an embodiment, the electronic device 10 may simultaneously transmit the first signal and receive the second signal. In this case, compared to the frequency intensity of the second signal in which signal interference does not occur, an interference region may occur in a frequency band adjacent to and/or common with the second harmonic component of the first signal and the second signal. For example, when the electronic device 10 simultaneously receives the second signal and the first signal corresponding to the LTE band 13, signal interference may occur in an adjacent section of the 1573 MHz to 1574.42 MHz band, which is an adjacent frequency band 230 of the second signal, causing the frequency intensity to increase due to interference components; this increased frequency intensity (not shown) may degrade the satellite signal communication performance of the electronic device 10.

According to an embodiment, the processor 100 of the electronic device 10 may receive the second signal from the satellite 12 by using the second wireless communication circuitry 120, and the received second signal may be included in the second frequency band 220. The processor 100 may simultaneously receive a first signal associated with cellular communication from the base station 11 by using the first wireless communication circuitry 110, and the received first signal may be included in the third frequency band 210. In this case, signal interference may occur between a second harmonic component of the first signal and the second signal. A section in which the signal interference occurs may correspond to a frequency band adjacent to and/or a common with the second harmonic component of the first signal and the second signal. For example, the second signal may be included in a frequency band of 1574.42 MHz to 1576.42 MHz, and the second harmonic component of the first signal corresponding to the LTE band 14 may be included in a frequency band of 1577 MHz to 1595 MHz. In this case, signal interference may be occurred in an adjacent interval of a frequency band 1576.42 M Hz to 1577 MHz, which is an adjacent frequency band 240 of the second harmonic component of the first signal and the second signal.

According to an embodiment, when the electronic device 10 simultaneously receives the first signal and the second signal, an interference region may occur, when compared to a frequency intensity of the second signal without signal interference, in a frequency band adjacent to and/or common with the second harmonic component of the first signal and the second signal. For example, when the electronic device 10 simultaneously receives the second signal and the first signal corresponding to the LTE band 14, signal interference may occur in an adjacent section of the 1576.42 MHz to 1577 MHz band, which is the frequency band 240 adjacent to the second harmonic component of the first signal and the second signal, causing the frequency intensity to increase due to interference components, and the satellite signal communication performance of the electronic device 10 may deteriorate due to the increased frequency intensity 411.

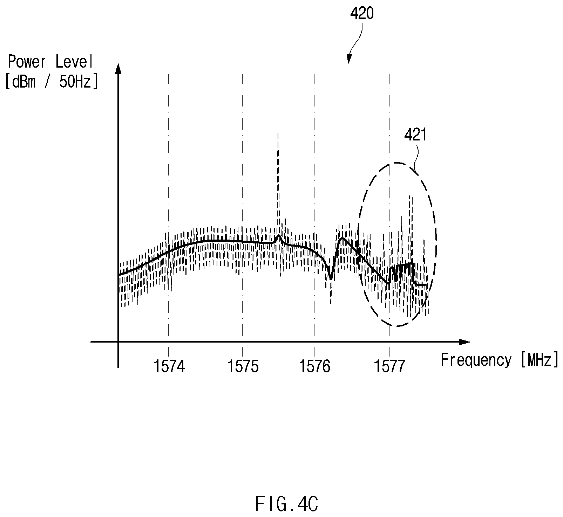

FIG. 4C illustrates the signal strength according to the frequency of a signal received by the electronic device according to an embodiment, when the operation 311 of FIG. 3A is performed.

Referring to FIG. 4C, the electronic device 10 may attenuate at least a portion of the second signal, in which signal interference occurs due to a signal other than the second signal, using the control information. For example, the frequency graph 420 of FIG. 4C may be a frequency graph after the processor 100 attenuates the second signal with signal interference by the signal (e.g., the second harmonic component of the first signal corresponding to the LTE band 14) other than the second signal using the control information.

According to an embodiment, the processor 100 of the electronic device 10 may receive the uplink radio resource information from the base station 11 and correct the second signal using the control information set based on a secondary harmonic component of the first signal indicated by the radio resource information. In an example, the processor 100 may identify the secondary harmonic component of the first signal indicated by the resource information and correct the second signal with the signal interference using the control information set based on the identified secondary harmonic component. In this case, the control information may be frequency information generated by the processor 100 based on the identified secondary harmonic component.

According to an embodiment, when the electronic device 10 simultaneously receives the second signal and the first signal corresponding to the LTE band 13, signal interference may occur in an adjacent section of the 1573 MHz to 1574.42 MHz band, which is an adjacent frequency band of the second signal and the second harmonic component of the first signal. Thus, the processor 100 may generate an adjacent frequency in the 1573 MHz to the 1574.42 MHz band and subtract the adjacent frequency from the second signal. For example, in order to remove interference components of the second signal, the processor 100 may generate signals corresponding to frequencies of 1573.0 MHz, 1572.9 MHz, 1572.8 MHz, 1572.7 MHz, 1572.6 MHz, and 1572.5 MHz frequencies, which are frequencies adjacent to the band of 1573 MHz to 1574.42MHz, and subtract the generated signals from the second signal. The subtracted second signal may have a lowered frequency intensity in the signal interference interval. In an example, the processor 100 may extract frequency information for subtracting the second signal from the memory 130.

According to an embodiment, when the electronic device 10 simultaneously receives the second signal and the first signal corresponding to the LTE band 14, signal interference may occur in an adjacent band of the 1576.42 MHz to 1577 MHz, which is an adjacent frequency band of the second signal and the second harmonic component of the first signal. Therefore, the processor 100 may generate adjacent frequencies of the band 1576.42 MHz to 1577 MHz and subtract the adjacent frequencies from the second signal. For example, the processor 100 may generate signals corresponding to frequencies of 1577.0 MHz, 1577.1 MHz, 1577.2 MHz, 1577.3 MHz, 1577.4 MHz, and 1577.5 MHz, which are frequencies adjacent to the band of 1576.41 MHz to 1577 MHz, to remove the interference components of the second signal, and subtract the generated signals from the second signal. The subtracted second signal may have a lowered frequency intensity in the signal interference interval (e.g., 411 of FIG. 4B). In an example, the processor 100 may extract frequency information for subtracting the second signal from the memory 130.

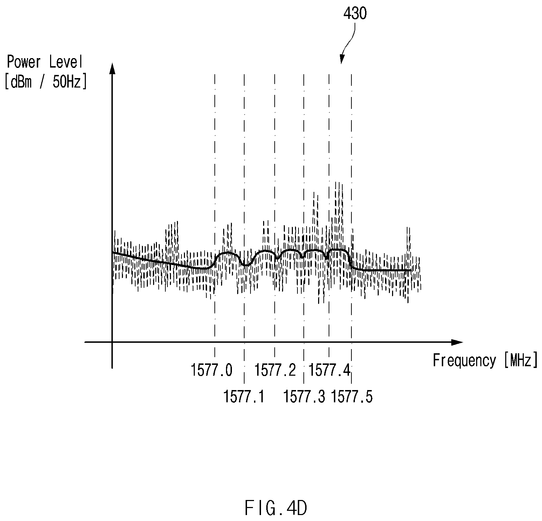

FIG. 4D illustrates divided frequency intervals referred by the control frequency signals when the electronic device attenuates the second signal according to an embodiment.

Referring to FIG. 4D, the processor 100 of the electronic device 10 may divide the frequency intervals of the second signal in which the interference occurs to correct the second signal with signal interference effectively. For example, the frequency graph 430 of FIG. 4D may be a frequency graph after the processor 100 divides signal interference intervals and attenuates the second signal using control information.

According to an embodiment, when the electronic device 10 simultaneously receives the second signal and the first signal corresponding to the LTE band 13, the processor 100 may set a reference frequency based on a second harmonic component of the first signal indicated by the radio resource information of the uplink received by the electronic device 10 from the base station 11. The processor 100 may divide frequency intervals based on the set reference frequency to correct the second signal in which the signal interference occurs. For example, the processor 100 may set the reference frequency to 1559.32 MHz based on the second harmonic component of the first signal indicate by the radio resource information, divide the frequency intervals to have a negative (-) difference of 0.1 MHz, 0.2 MHz, 0.3 MHz, 0.4 MHz, and 0.5 MHz, respectively from 1559.32 MHz, generate frequency signals of 1559.32 Mhz, 1559.22 MHz, 1559.12 MHz, 1559,02 MHz, 1558.92 MHz, and 1558.72 MHz corresponding to the divided frequency intervals, and then subtract the generated frequency signals from the second signal, to correct the second signal. In an example, referring back to FIG. 3A, the reference frequency may correspond to an edge frequency of a transmitting signal calculated by the processor 100 based on the radio resource block information.

According to an embodiment, when a center frequency of the first signal is lower than a center frequency of the second signal, the processor 100 of the electronic device 10 may generate control frequency signals having negative frequency difference values based on the highest frequency among secondary harmonic components of the first signal's center frequency, and subtract the control frequency signals from the second signal to mitigate the interference effect on the second signal. For example, in case of receiving the second signal and the first signal corresponding to the LTE band 13 simultaneously, the processor 100 may generate control frequency signals (e.g., 1572.9 MHz and 1572.8 MHz) having negative frequency difference values from 1573 MHz corresponding to the highest frequency of secondary harmonics components of the first signal's center frequency, and subtract the generated control frequency signals from the second signal.

According to an embodiment, when the center frequency of the first signal is higher than the center frequency of the second signal, the processor 100 of the electronic device 10 may generate control frequency signals having a positive frequency difference values based on the lowest frequency of secondary harmonic components of the first signal's center frequency, and subtract the control frequency signals from the second signal to mitigate the interference effect on the second signal. For example, when the second signal and the first signal corresponding to the LTE band 14 are simultaneously received, the processor 100 may generate control frequency signals (e.g., 1590.78 MHz and 1590.88 MHz) having positive frequency difference values from 1590.68 MHz corresponding to the lowest frequency of the secondary harmonic components of the first signal's center frequency, and may subtract the generated control frequency signals from the second signal.

According to an embodiment, when the electronic device 10 simultaneously receives the second signal and the first signal corresponding to the LTE band 14, in order to correct the second signal in which the signal interference occurs, the processor 100 may set a reference frequency based on a second harmonic component of the first signal indicated by the radio resource information of the uplink received by the electronic device 10 from the base station 11, and divide frequency intervals in which the signal interference occurs based on the set reference frequency. For example, in order to correct the second signal, the processor 100 may set the reference frequency to 1577.0 MHz based on the second harmonic component of the first signal indicate by the radio resource information, divide the frequency intervals to have positive (+) differences of 0.1 MHz, 0.2 MHz, 0.3 MHz, 0.4 MHz, and 0.5 MHz from 1577.0 MHz, generate frequency signals of 1577.0 MHz 1577.1 MHz, 1577.2 MHz, 1577.3 MHz, 1577.4 MHz, and 1577.5 MHz corresponding to the divided frequency intervals, and then subtract the generated frequency signals from the second signal.

According to an embodiment, the processor 100 of the electronic device 10 may be configured to divide at least a portion of the second signal into one or more frequency intervals and attenuate at least a portion of the second signal by applying one or more control frequency signals to the one or more frequency intervals.

According to an embodiment, attenuating at least a portion of the second signal may include dividing the at least a portion of the second signal into one or more frequency intervals, and attenuating at least a portion of a second signal by applying one or more control frequency signals to the one or more frequency intervals.

FIG. 5 shows a reference table referenced to an operation 304 of FIG. 3A.

Referring to FIG. 5, the processor 100 of the electronic device 10 may generate control information to correct the second signal based on TB_1 and TB_2. In an example, the memory 130 may store information corresponding to TB_1 and TB_2.

Referring to TB_1 according to an embodiment, the processor 100 of the electronic device 10 may identify the center frequency of the first signal based on the number of resource blocks of the uplink radio resource information and/or the information about the positions of the resource blocks received from the base station 11, and may identify the second harmonic component of the first signal and the reference frequency of the first signal based on an identified center frequency of the first signal. In this case, the processor 100 may identify, as control information, frequencies different from the identified reference frequency of the first signal by set frequencies. For example, when the uplink radio resource information received by the electronic device 10 from the base station 11 corresponds to the LTE band 13, the number of resource blocks corresponds to 12 RBs, and the location of the resource blocks corresponds to 0, the processor 100 may identify the center frequency of the first signal as 778.58 MHz. In addition, the processor 100 may identify a frequency corresponding to the secondary harmonic component of the first signal's center frequency as 1557.16 MHz, which corresponds to twice the identified center frequency of the first signal, and may identify the reference frequency of the first signal as 2559.32 MHz, which is different from the frequency of the secondary harmonic component of the identified first signal by +2.16 MHz. The difference between the reference frequency of the first signal and the frequency of the second harmonic component of the first signal may be preset by the processor 100. The processor 100 may generate at least one of a first reference frequency and frequencies having an offset frequency of -0.1 MHz with respect to the reference frequency of the first signal as the control frequency.

According to an embodiment, the processor 100 of the electronic device 10 may identify the center frequency of the first signal based on the number of resource blocks of the uplink radio resource information received from the base station 11 and/or the information about the positions of the resource blocks, and may extract the control information stored in the memory 130 based on the identified center frequency of the first signal. For example, when the uplink radio resource information received by the electronic device 10 from the base station 11 corresponds to LTE band 13, the number of resource blocks corresponds to 12 RBs, and the position of the resource block corresponds to 19, the processor 100 may extract at least one of the frequencies of 1566.16 MHz, 1566.06 MHz, 1565.96 MHz, 1565,86 MHz, 156576 MHz, 156566 MHz, 156556 MHz, 156546 MHz, and 1565.36 MHz stored in the memory 130 as the control frequencies.

Referring to TB_2 according to an embodiment, the processor 100 of the electronic device 10 may identify the center frequency of the first signal based on the number of resource blocks of the uplink radio resource information received from the base station 11 and/or the information about the positions of the resource blocks, and may identify a second harmonic component of the first signal and a reference frequency of the first signal based on the identified center frequency of the first signal. In this case, the processor 100 may identify, as control information, frequencies different from the identified reference frequency of the first signal by preset frequencies. For example, when the uplink radio resource information received by the electronic device 10 from the base station 11 corresponds to the LTE band 14, the number of resource blocks corresponds to 12 RBs, and the location of the resource blocks corresponds to 19, the processor 100 may identify the center frequency of the first signal as 793 MHz. In addition, the processor 100 may identify a frequency corresponding to the second harmonic component of the first signal's center frequency as 1586 MHz, which corresponds to twice the center frequency of the identified first signal. The processor 100 may identify the reference frequency of the first signal as 1583.84 MHz, which is different from the frequency of the second harmonic component of the identified first signal by -2.16 MHz. The difference between the reference frequency of the first signal and the frequency of the second harmonic component of the first signal may be preset by the processor 100. The processor 100 may generate at least one of the first reference frequency and frequencies having an offset frequency of +0.1 MHz with respect to the reference frequency of the first signal as the control frequencies.

According to an embodiment, the processor 100 of the electronic device 10 may identify the center frequency of the first signal based on the number of resource blocks of the uplink radio resource information received from the base station 11 and/or the information about the positions of the resource blocks, and may extract the control information stored in the memory 130 based on the identified center frequency of the first signal. For example, when the uplink radio resource information received by the electronic device 10 from the base station 11 corresponds to the LTE band 14, the number of resource blocks corresponds to 12 RBs, and the position of the resource block corresponds to 38, the processor 100 may extract at least one of frequencies of 1590.68 MHz, 1590.78 MHz, 1590,88 MHz, 1590 .98 MHz, 1591.08 MHz, 1591,18 MHz, 1591 .28 MHz, 159138 MHz, and 1591.48 MHz stored in the memory 130 as the control frequencies.

Fig. 6 is a block diagram illustrating an electronic device in a network environment according to various embodiments.

Referring to Fig. 6, the electronic device 601 in the network environment 600 may communicate with an electronic device 602 via a first network 698 (e.g., a short-range wireless communication network), or at least one of an electronic device 604 or a server 608 via a second network 699 (e.g., a long-range wireless communication network). According to an embodiment, the electronic device 601 may communicate with the electronic device 604 via the server 608. According to an embodiment, the electronic device 601 may include a processor 620, memory 630, an input module 650, a sound output module 655, a display module 660, an audio module 670, a sensor module 676, an interface 677, a connecting terminal 678, a haptic module 679, a camera module 680, a power management module 688, a battery 689, a communication module 690, a subscriber identification module(SIM) 696, or an antenna module 697. In some embodiments, at least one of the components (e.g., the connecting terminal 678) may be omitted from the electronic device 601, or one or more other components may be added in the electronic device 601. In some embodiments, some of the components (e.g., the sensor module 676, the camera module 680, or the antenna module 697) may be implemented as a single component (e.g., the display module 660).

The processor 620 may execute, for example, software (e.g., a program 640) to control at least one other component (e.g., a hardware or software component) of the electronic device 601 coupled with the processor 620, and may perform various data processing or computation. According to one embodiment, as at least part of the data processing or computation, the processor 620 may store a command or data received from another component (e.g., the sensor module 676 or the communication module 690) in volatile memory 632, process the command or the data stored in the volatile memory 632, and store resulting data in non-volatile memory 634. According to an embodiment, the processor 620 may include a main processor 621 (e.g., a central processing unit (CPU) or an application processor (AP)), or an auxiliary processor 623 (e.g., a graphics processing unit (GPU), a neural processing unit (NPU), an image signal processor (ISP), a sensor hub processor, or a communication processor (CP)) that is operable independently from, or in conjunction with, the main processor 621. For example, when the electronic device 601 includes the main processor 621 and the auxiliary processor 623, the auxiliary processor 623 may be adapted to consume less power than the main processor 621, or to be specific to a specified function. The auxiliary processor 623 may be implemented as separate from, or as part of the main processor 621.

The auxiliary processor 623 may control at least some of functions or states related to at least one component (e.g., the display module 660, the sensor module 676, or the communication module 690) among the components of the electronic device 601, instead of the main processor 621 while the main processor 621 is in an inactive (e.g., sleep) state, or together with the main processor 621 while the main processor 621 is in an active state (e.g., executing an application). According to an embodiment, the auxiliary processor 623 (e.g., an image signal processor or a communication processor) may be implemented as part of another component (e.g., the camera module 680 or the communication module 690) functionally related to the auxiliary processor 623. According to an embodiment, the auxiliary processor 623 (e.g., the neural processing unit) may include a hardware structure specified for artificial intelligence model processing. An artificial intelligence model may be generated by machine learning. Such learning may be performed, e.g., by the electronic device 601 where the artificial intelligence is performed or via a separate server (e.g., the server 608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 630 may store various data used by at least one component (e.g., the processor 620 or the sensor module 676) of the electronic device 601. The various data may include, for example, software (e.g., the program 640) and input data or output data for a command related thereto. The memory 630 may include the volatile memory 632 or the non-volatile memory 634.

The program 640 may be stored in the memory 630 as software, and may include, for example, an operating system (OS) 642, middleware 644, or an application 646.

The input module 650 may receive a command or data to be used by another component (e.g., the processor 620) of the electronic device 601, from the outside (e.g., a user) of the electronic device 601. The input module 650 may include, for example, a microphone, a mouse, a keyboard, a key (e.g., a button), or a digital pen (e.g., a stylus pen).

The sound output module 655 may output sound signals to the outside of the electronic device 601. The sound output module 655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 660 may visually provide information to the outside (e.g., a user) of the electronic device 601. The display module 660 may include, for example, a display, a hologram device, or a projector and control circuitry to control a corresponding one of the display, hologram device, and projector. According to an embodiment, the display module 660 may include a touch sensor adapted to detect a touch, or a pressure sensor adapted to measure the intensity of force incurred by the touch.

The audio module 670 may convert a sound into an electrical signal and vice versa. According to an embodiment, the audio module 670 may obtain the sound via the input module 650, or output the sound via the sound output module 655 or a headphone of an external electronic device (e.g., an electronic device 602) directly (e.g., wiredly) or wirelessly coupled with the electronic device 601.

The sensor module 676 may detect an operational state (e.g., power or temperature) of the electronic device 601 or an environmental state (e.g., a state of a user) external to the electronic device 601, and then generate an electrical signal or data value corresponding to the detected state. According to an embodiment, the sensor module 676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 677 may support one or more specified protocols to be used for the electronic device 601 to be coupled with the external electronic device (e.g., the electronic device 602) directly (e.g., wiredly) or wirelessly. According to an embodiment, the interface 677 may include, for example, a high definition multimedia interface (HDMI), a universal serial bus (USB) interface, a secure digital (SD) card interface, or an audio interface.

A connecting terminal 678 may include a connector via which the electronic device 601 may be physically connected with the external electronic device (e.g., the electronic device 602). According to an embodiment, the connecting terminal 678 may include, for example, a HDMI connector, a USB connector, a SD card connector, or an audio connector (e.g., a headphone connector).

The haptic module 679 may convert an electrical signal into a mechanical stimulus (e.g., a vibration or a movement) or electrical stimulus which may be recognized by a user via his tactile sensation or kinesthetic sensation. According to an embodiment, the haptic module 679 may include, for example, a motor, a piezoelectric element, or an electric stimulator.

The camera module 680 may capture a still image or moving images. According to an embodiment, the camera module 680 may include one or more lenses, image sensors, image signal processors, or flashes.

The power management module 688 may manage power supplied to the electronic device 601. According to one embodiment, the power management module 688 may be implemented as at least part of, for example, a power management integrated circuit (PMIC).

The battery 689 may supply power to at least one component of the electronic device 601. According to an embodiment, the battery 689 may include, for example, a primary cell which is not rechargeable, a secondary cell which is rechargeable, or a fuel cell.

The communication module 690 may support establishing a direct (e.g., wired) communication channel or a wireless communication channel between the electronic device 601 and the external electronic device (e.g., the electronic device 602, the electronic device 604, or the server 608) and performing communication via the established communication channel. The communication module 690 may include one or more communication processors that are operable independently from the processor 620 (e.g., the application processor (AP)) and supports a direct (e.g., wired) communication or a wireless communication. According to an embodiment, the communication module 690 may include a wireless communication module 692 (e.g., a cellular communication module, a short-range wireless communication module, or a global navigation satellite system (GNSS) communication module) or a wired communication module 694 (e.g., a local area network (LAN) communication module or a power line communication (PLC) module). A corresponding one of these communication modules may communicate with the external electronic device via the first network 698 (e.g., a short-range communication network, such as Bluetooth^{™}, wireless-fidelity (Wi-Fi) direct, or infrared data association (IrDA)) or the second network 699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 692 may identify and authenticate the electronic device 601 in a communication network, such as the first network 698 or the second network 699, using subscriber information (e.g., international mobile subscriber identity (IMSI)) stored in the subscriber identification module 696.

The wireless communication module 692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 692 may support a high-frequency band (e.g., the mmWave band) to achieve, e.g., a high data transmission rate. The wireless communication module 692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 692 may support various requirements specified in the electronic device 601, an external electronic device (e.g., the electronic device 604), or a network system (e.g., the second network 699). According to an embodiment, the wireless communication module 692 may support a peak data rate (e.g., 20Gbps or more) for implementing eMBB, loss coverage (e.g., 664dB or less) for implementing mMTC, or U-plane latency (e.g., 0.5ms or less for each of downlink (DL) and uplink (UL), or a round trip of 6ms or less) for implementing URLLC.

The antenna module 697 may transmit or receive a signal or power to or from the outside (e.g., the external electronic device) of the electronic device 601. According to an embodiment, the antenna module 697 may include an antenna including a radiating element composed of a conductive material or a conductive pattern formed in or on a substrate (e.g., a printed circuit board (PCB)). According to an embodiment, the antenna module 697 may include a plurality of antennas (e.g., array antennas). In such a case, at least one antenna appropriate for a communication scheme used in the communication network, such as the first network 698 or the second network 699, may be selected, for example, by the communication module 690 (e.g., the wireless communication module 692) from the plurality of antennas. The signal or the power may then be transmitted or received between the communication module 690 and the external electronic device via the selected at least one antenna. According to an embodiment, another component (e.g., a radio frequency integrated circuit (RFIC)) other than the radiating element may be additionally formed as part of the antenna module 697.

According to various embodiments, the antenna module 697 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 601 and the external electronic device 604 via the server 608 coupled with the second network 699. Each of the electronic devices 602 or 604 may be a device of a same type as, or a different type, from the electronic device 601. According to an embodiment, all or some of operations to be executed at the electronic device 601 may be executed at one or more of the external electronic devices 602, 604, or 608. For example, if the electronic device 601 should perform a function or a service automatically, or in response to a request from a user or another device, the electronic device 601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 601. The electronic device 601 may provide the outcome, with or without further processing of the outcome, as at least part of a reply to the request. To that end, a cloud computing, distributed computing, mobile edge computing (MEC), or client-server computing technology may be used, for example. The electronic device 601 may provide ultra low-latency services using, e.g., distributed computing or mobile edge computing. In another embodiment, the external electronic device 604 may include an internet-of-things (IoT) device. The server 608 may be an intelligent server using machine learning and/or a neural network. According to an embodiment, the external electronic device 604 or the server 608 may be included in the second network 699. The electronic device 601 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 640) including one or more instructions that are stored in a storage medium (e.g., internal memory 636 or external memory 638) that is readable by a machine (e.g., the electronic device 601). For example, a processor (e.g., the processor 620) of the machine (e.g., the electronic device 601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device including:
a first antenna;
a second antenna;
first wireless communication circuitry electrically connected to the first antenna and configured to transmit and receive signals associated with cellular communication;
second wireless communication circuitry electrically connected to the second antenna and configured to transmit and receive satellite signals; and
at least one processor electrically connected to the first wireless communication circuitry and the second wireless communication circuitry,
wherein the processor is configured to:
receive radio resource information of an uplink allocated to the electronic device using the first wireless communication circuitry,
receive a second signal using the second wireless communication circuitry,
identify control information set based on a secondary harmonic component of a first signal, the first signal being indicated by the radio resource information, and
attenuate at least a portion of the second signal using the control information.

2. The electronic device of claim 1, wherein the control information includes information on one or more of control frequency signals related to the secondary harmonic of the first signal.

3. The electronic device of any one of claims 1 to 2, wherein the radio resource includes information on a number of resource blocks associated with the uplink and/or locations of the resource blocks.

4. The electronic device of claim 2, wherein the at least one processor is further configured to attenuate at least a portion of the second signal by using the one or more of control frequency signals.

5. The electronic device of any one of claims 2 or 4, wherein the at least one processor is further configured to:
divide at least a portion of the second signal into one or more of frequency sections, and
attenuate at least a portion of the second signal by applying the one or more of control frequency signals to the one or more of frequency sections.

6. The electronic device of any one of claims 1 to 5, further including memory electrically connected to the processor,
wherein the memory stores one or more control information set based on radio resource information.

7. The electronic device of any one of claims 1 to 6, wherein the first signal belongs to a first frequency band and/or a third frequency band.

8. The electronic device of any one of claims 1 to 7, wherein the at least one processor is configured to determine whether the first signal belongs to a first frequency band and/or a third frequency band.

9. The electronic device of any one of claims 1 to 8, wherein the at least one processor is further configured to identify the one or more of control frequency signals included in the control information based on a frequency band to which the first signal belongs.

10. The electronic device of any one of claims 1 to 9,
wherein the second wireless communication circuitry is configured to transmit and receive signals in a second frequency band, and
wherein the secondary harmonic of the first signal is included in or adjacent to the second frequency band.

11. The electronic device of any one of claims 1 to 10, wherein the at least one processor is further configured to attenuate at least a portion of the second signal by using the control information when the second wireless communication circuitry is activated after receiving the radio resource information.

12. The electronic device of any one of claims 1 to 11, wherein the at least one processor is configured to attenuate at least a portion of the second signal by using the control information when the second wireless communication circuitry is activated while transmitting and/or receiving the first signal based on the radio resource information.

13. A method of controlling an electronic device comprising:
receiving radio resource information of uplink using first wireless communication circuitry;
receiving a second signal using second wireless communication circuitry;
identifying control information set based on a secondary harmonic component of a first signal, the first signal being indicated by the radio resource information; and
attenuating at least a portion of the second signal using the control information.

14. The method of claim 13, wherein the control information includes information on one or more of control frequency signals related to the secondary harmonic of the first signal.

15. The method of claim 14, wherein the attenuating at least a portion of the second signal using the control information includes:
attenuating at least a portion of the second signal using the one or more of control frequency signals.
